Europäisches Patentamt

European Patent Office

Office européen des brevets

(11) Veröffentlichungsnummer: **0 085 849**
**B1**

# EUROPÄISCHE PATENTSCHRIFT

(45) Veröffentlichungstag der Patentschrift:
13.01.88

(51) Int. Cl.⁴: **H 04 B 9/00**

(21) Anmeldenummer: 83100355.3

(22) Anmeldetag: 17.01.83

(54) Verfahren zur Reduzierung der Pegeldynamik in einem optischen Übertragungssystem.

(30) Priorität: 04.02.82 DE 3203828

(43) Veröffentlichungstag der Anmeldung:
17.08.83 Patentblatt 83/33

(45) Bekanntmachung des Hinweises auf die Patenterteilung:
13.01.88 Patentblatt 88/2

(84) Benannte Vertragsstaaten:
DE FR GB NL

(56) Entgegenhaltungen:
PATENTS ABSTRACTS OF JAPAN, Band 3, Nr. 145
(E-155), 30. November 1979, Seite 12 E 155
PATENTS ABSTRACTS OF JAPAN, Band 3, Nr. 6 (E-85), 22. Januar 1979, Seite 13 E 85
1978 IEEE INTERNATIONAL SYMPOSIUM ON
CIRCUITS AND SYSTEMS PROCEEDINGS, 17.-19.
Mai 1978, New York, Seiten 30-34, IEEE, New York,
US; E.G.RAWSON u.a.. "Application of fiber optics
to high-speed local computer networks"

(73) Patentinhaber: Siemens Aktiengesellschaft Berlin
und München, Wittelsbacherplatz 2, D-8000
München 2 (DE)

(72) Erfinder: Moustakas, Steven, Dr., Agnesstrasse 2,
D-8000 München 40 (DE)
Erfinder: Witte, Hans- Hermann, Dr.rer.nat., Dipl.-
Phys., Hippelstrasse 15, D-8000 München 82 (DE)

## Beschreibung

Die Erfindung betrifft ein Verfahren zur Reduzierung der Pegeldynamik in einem optischen Übertragungssystem nach dem Oberbegriff des Patentanspruchs 1.

In einem optischen Übertragungssystem der genannten Art tritt häufig das Problem auf, daß die aus den Sendern in das System eingekoppelten optischen Leistungen an den Orten der Empfänger unterschiedliche Pegel aufweisen. Als Ursachen kommen beispielsweise unterschiedliche Steckerverluste und Faserdämpfungen auf den verschiedenen Strecken zwischen jedem Sender und jedem Empfinger in Frage. Diese Leistungsschwankungen bedeuten bei der Detektierung je nach der Größe dieser Pegelschwankungen einen erheblichen zusätzlichen elektronischen Aufwand im Empfänger-Schaltkreis- bzw. eine erhöbte Fehlerrate.

Aufgabe der Erfindung ist es, ein Verfahren der genannten Art anzugeben, das einfach und preisgünstig ist, und mit dem sich die Pegeldynamik weitestgehend reduzieren läßt.

Diese Aufgabe wird durch die Merkmale gemäß dem kennzeichnenden ieil des Patentanspruchs 1 gelöst.

Dadurch erreicht man, daß an einem bestimmten Empfänger von jedem Sender her die gleiche optische Leistung ankommt und damit die Pegeldynamik bei diesem Empfänger null ist.

Durch das erfindungsgemäßes Verfahren lassen sich somit die Leistungsschwankungen an einem bestimmten Empfänger völlig ausgleichen. Im allgemeinen wird es aber so sein, daß damit nicht auch schon automatisch die Leistungspegel am Eingang der übrigen Empfänger gleich sind. Deshalb wird zusätzlich bei jedem der übrigen Empfänger eine von diesem Empfänger erzeugte und von der ihm zugeführten optischen Leistung abhängige Leistung eingestellt oder geregelt. Auf diese Weise können verschiedene Empfänger, auf die jeweils optische Leistungen unterschiedlicher Amplitude fallen, in dem Sinne abgeglichen werden, daß die von den Empfängern erzeugten Leistungen gleich sind.

Besonderes vorteilhaft ist es, wenn gemäß Anspruch 2 die dem Sender zugeführte Betriebsleistung durch einen in Serie zu einem elektrooptischen Sendeelement, beispielsweise eine Sendediode, geschalteten variabeln elektrischen Wiederstand über den Strom eingestellt wird. Als variabler Wiederstand kann ein Trimm-Potentiometer verwendet werden.

Vorteilhafterweise wird ferner gemäß Anspruch 3 so vorgegangen, daß durch einen in Serie mit einem optoelektrischen Wandler in dem Empfänger, beispieisweise einer Fotodiode, geschalteten variablen Widerstand der von dem Wandler abgegebene Strom eingestellt oder geregelt wird. Als variabler Widerstand eignet sich auch hier ein Trimm-Potentiometer.

Die Erfindung wird anhand der beigefügten Figuren beispielhaft näher erläutert. Von den Figuren zeigen:

Figur 1 in schematischer Darstellung einen Stern-Bus,

Figur 2 zeigt einen Teil eines Senders mit einem Trimm-Potentiometer, und

Figur 3 einen Teil eines Empfängers mit einem Trimm-Potentiometer.

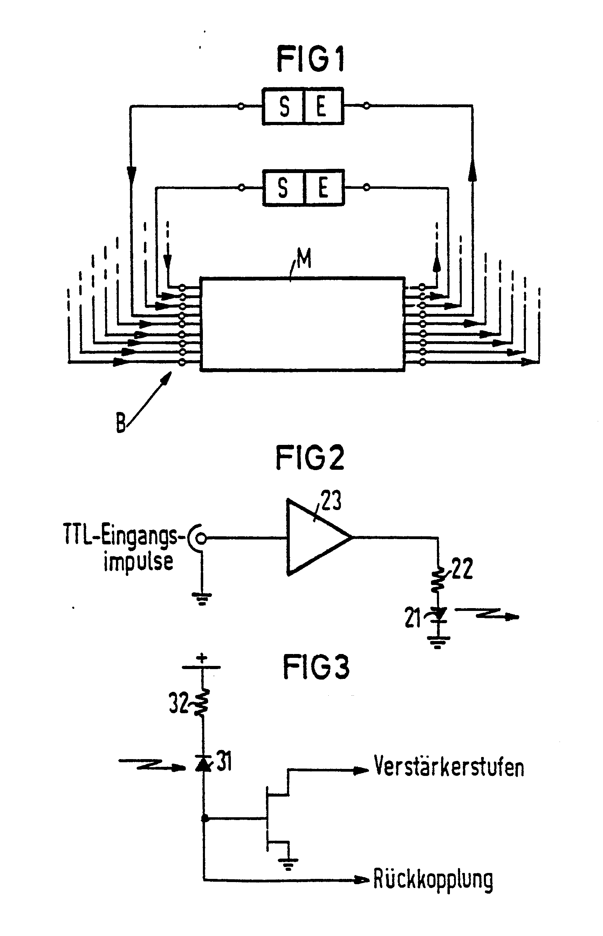

Bei dem in Figur 1 dargestellten Stern-Bus ist jeder Teilnehmer über einen Sender S bzw. Empfänger E und entsprechende Stecker mit dem Bus verbunden, der einen Sternkoppler M umfaßt. Ein derartiger Sternkoppler ist beispielsweise aus "Applied Optics". Bd. 13 (1974), S. 2540 - 2545 oder auch aus der DE-OS-29 15 114 bekannt. In einem solchen Sternkoppler M laufen Fasern zu einem gemeinsamen Mischerelement und von diesem läuft eine gleichgroße Anzahl von Fasern wieder fort. Ein in irgendeiner Faser dem Mischerelement zugeführtes Lichtsignal wird auf alle abgehenden Fasern verteilt.

In der Figur 1 sind Eingangsfasern, in denen Lichtsignale dem Sternkoppler M zugeführt werden, durch Linien dargestellt, die mit einer zum Mischerelement zeigenden Pfeilspitze versehen sind. Ausgangsfasern, in denen Lichtsignale vom Mischerelement fortgeführt werden, sind durch Linien dargestellt, die mit einer vom Mischerelement fort zeigenden Pfeilspitze versehen sind. Die auf den Linien eingezeichieten Punkte stellen Faserverbindungen, beispielsweise Steckverbindungen oder Spleiße, dar.

Über dem Sternkoppler M gelangt die durch moduliertes Licht dargestellte Information irgendeines Senders S zu im Prinzip allen Empfängern E der Teilnehmer. Durch die unterschiedlichen Steckerverluste und Faserdämpfungen oder Faserlängen auf der Sendeseite und durch eine unregelmäßige Aufteilung des Lichts durch den Sternkoppler M schwanken die Leistungen am Ort eines bestimmten Empfängers E als Funktion des Senders S. Diese Pegeldynamik kann gut mehr als 5 dB betragen.

Durch Trimm-Potentiometer in den Sendern S lassen sich die Leistungsschwankungen an einem bestimmten Empfänger E völlig ausgleichen. In der Figur 2 ist ein Teil eines Senders mit einem solchen Trimm-Potentiometer dargestellt. Die optische Ausgangsleistung der Sendediode 21 des Senders wird durch das in Serie dazu geschaltete Trimm-Potentiometer 22 über den Strom eingestellt. Der Strom wird von einem Treiber 23 geliefert, dem beispielsweise TTL-Eingangsimpulse zugeführt werden. Dieses Prinzip ist z. B. aus Patents Abstracts of Japan, Band 3, Nr. 145 (E-155), 30. November 1979, Seite 12 E 155 & JP-A-54 122 904, bekannt.

Wie schon erwähnt, wird es im allgemeinen so sein, daß mit dem vorstehend beschriebenen Ausgleich an dem bestimmten Empfänger nicht auch schon automatisch die Leistungspegel am Eingang der übrigen Empfänger E gleich sind. Diese Schwankungen rühren noch im wesentlichen von unterschiedlichen Steckerverlusten auf der Empfängerseite und unterschiedlichen Faserlängen und damit Dämpfungen zwischen dem Sternkoppler und dem jeweiligen Empfängerort her. Wenn der Bus mit gleichen Empfänger-Moduln arbeiten soll, insbesondere Empfindlichkeit und Schwellwert am Komparator, so ist man auch noch an möglichst gleichen Pegeln bei allen Empfängern E interessiert. Dies läßt sich durch die Trimm-Potentiometer in den Empfängern E erreichen. In der in Figur 3 dargestellten Ausführungsform kann die von der Fotodiode 31 abgegebene elektrische Leistung durch das in Serie dazu geschaltete Trimm-Potentiometer 32 eingestellt oder geregelt werden. Dieses Prinzip ist z. B. aus Pantents Abstracts of Japan, Band 3 Nr. 6 (E-85) 22. Januar 1979, Seite 13 E 85 & JP-A-53 133 304, bekannt.

Langzeitänderungen der Dämpfungen auf den verschiedenen Strecken können durch manuelle Neueinstellung der Trimm-Potentiometer 22, 32 ausgeglichen werden.

## Patentansprüche

1. Verfahren zur Reduzierung der Pegeldynamik in einem optischen Sternbus-System, bei dem ein Sternkoppler (M) einerseits durch Eingangsfasern mit mehreren Sendern (S) und andererseits durch Ausgangsfasern mit mehreren Empfängern (E) verbunden ist, dadurch gekennzeichnet, daß die von jedem Sender (S) abgegebene optische Leistung durch Steuerung einer zugeführten Betriebsleistung so eingestellt wird, daß ein bestimmter Empfänger von jedem Sender die gleiche optische Leistung empfängt und daß bei jedem der übrigen Empfänger eine von diesem Empfänger erzeugte und von der ihm zugeführten optischen Leistung abhängige Leistung auf einen vorbestimmten Wert eingestellt oder geregelt wird.

2. Verfahren nach Anspruch 1, dadurch gekennzeichnet, daß die zugeführte Betriebsleistung durch einen in Serie zu einem elektrooptischen Sendeelement (21) geschalteten variablen elektrischen Widerstand (22) über den Strom eingestellt wird.

3. Verfahren nach Anspruch 1 oder 2, dadurch gekennzeichnet , daß in jedem der übrigen Empfänger durch einen in Serie mit einem optoelektrischen Wandler (31) dieses Empfängers geschalteten variablen Widerstand (32) der von dem Wandler (31) abgegebene Strom eingestellt oder geregelt wird.

## Claims

1. A method of reducing the dynamic level in an optical star bus system, wherein a star coupler (M) is connected to a plurality of transmitters (S) by input fibres and to a plurality of receivers (E) by output fibres, characterised in that the optical power emitted by each transmitter (S) is adjusted by control of its operating power supply in such manner that any given receiver receives the same optical power from each transmitter, and that in each of the other receivers a power generated by this receiver and dependent upon the optical power supplied to the receiver is adjusted or regulated to a predetermined value.

2. A method as claimed in Claim 1, characterised in that the operating power supply current is adjusted by a variable electrical resistor (22) connected in series with an electro-optical transmitting element (21).

3. A method as claimed in Claims 1 or 2, characterised in that in each of the other receivers, the current emitted by an optoelectronic transducer (31) of this receiver is adjusted or regulated by means of a variable resistor (32) connected in series with this transducer (31).

## Revendications

1. Procédé pour réduire la dynamique de niveau dans un système optique en forme de bus en étoile, dans lequel un coupleur en étoile (M) est relié d'une part par des fibres d'entrée à plusieurs émetteurs (S) et d'autre part par des fibres de sortie à plusieurs récepteurs (E), caractérisé par le fait que la puissance optique délivrée par chaque émetteur (S) est réglée par commande d'une puissance de fonctionnement envoyée de telle sorte qu'un récepteur déterminé reçoit de chaque émetteur la même puissance optique et que dans chacun des autres récepteurs, une puissance, qui est produite par ce récepteur et dépend de la puissance optique envoyée à ce récepteur, est reglée ou asservie à une valeur prédéterminée.

2. Procédé suivant la revendication 1, caractérisé par le fait que la puissance envoyée de fonctionnement est réglée en fonction du courant par l'intermédiaire d'une résistance électrique variable (22) branchée en série avec un élément émetteur électro-optique (21).

3. Procédé suivant la revendication 1 ou 2, caractérisé par le fait que dans chacun des autres récepteurs, une résistance variable (32) branchée en série avec un transducteur électro-optique (31) de ce récepteur, règle ou asservit le courant délivré par le transducteur (31).

# FIG 1

S | E

S | E

M

B

# FIG 2

TTL-Eingangsimpulse

23

22

21

# FIG 3

32

31

Verstärkerstufen

Rückkopplung